Europäisches Patentamt

European Patent Office

Office européen des brevets

(19)

(11) Veröffentlichungsnummer : **0 088 145**
**B1**

# (12) EUROPÄISCHE PATENTSCHRIFT

(45) Veröffentlichungstag der Patentschrift :
09.07.86

(21) Anmeldenummer : 82102864.4

(22) Anmeldetag : 03.04.82

(51) Int. Cl.⁴ : **C 01 B   7/07**

(54) **Verfahren zur Reinigung von Salzsäuren.**

(30) Priorität : 05.03.82 DE 3207887

(43) Veröffentlichungstag der Anmeldung :
14.09.83 Patentblatt 83/37

(45) Bekanntmachung des Hinweises auf die Patenterteilung : 09.07.86 Patentblatt 86/28

(84) Benannte Vertragsstaaten :
AT BE DE FR GB IT NL SE

(56) Entgegenhaltungen :
DE-A- 2 413 043
DE-A- 2 610 851
DE-B- 1 171 878
US-A- 4 263 269
Patent Abstracts of Japan Band 5, Nr. 195, 11.
Dezember 1981
CHEMIE-INGENIEUR-TECHNIK, Band 35, Nr. 4, 1963
E. KOLBE et al. "Entwicklungen bei der adiabatischen
Chlorwasserstoff- und Fluorwasserstoff-Absorption",
Seiten 262-266

(73) Patentinhaber : HÜLS AKTIENGESELLSCHAFT
Patentabteilung / PB 15 - Postfach 13 20
D-4370 Marl 1 (DE)

(72) Erfinder : Sticken, Gerhard, Dr.
Am Gecksbach 32
D-4270 Dorsten (DE)

**Beschreibung**

Großtechnisch durchgeführte organische Chlorierungsprozesse liefern große Mengen HCl-Gas, welche im Zuge der Produktaufarbeitung von den Chlorierungsprodukten sowie gegebenenfalls noch vorhandenen Ausgangsstoffen abgetrennt und durchweg einer geeigneten Weiterverwendung zugeführt werden.

Die HCl-Gas-Entfernung aus solchen Chlorierungsproduktströmen erfolgt allgemein durch Absorption mit azeotroper, also etwa 20 gewichtsprozentiger Salzsäure unter Bildung von z. B. 30 gewichtsprozentiger Salzsäure, aus der anschließend das HCl-Gas durch Destillation vollständig wiedergewonnen werden kann. Die HCl-Absorption in nicht-wäßrigen Medien (z. B. Chloroform) nach Trennung von HCl und z. B. $C_1$-Chlorkohlenwasserstoffen durch Tieftemperatur-Kondensation ist offenbar wenig verbreitet (Ullmanns Encyklopädie der technischen Chemie, 4. Auflage 1975, Band 9, Seite 409 ff).

Bei Einsatz von Wasser als Absorptionsflüssigkeit kann der HCl-Anteil, der bis zum Erreichen des Azeotrops verbraucht wird, nicht durch Destillation wiedergewonnen werden. Daher wird Wasser nur insoweit als Absorptionsflüssigkeit verwendet, wie Bedarf an azeotroper bzw. unterazeotroper Salzsäure besteht.

Bei der HCl-Absorption in azeotroper Salzsäure oder Wasser lösen sich dem Lösungsgleichgewicht entsprechende Mengen der bei den Chlorierungsprozessen gebildeten Produkte sowie gegebenenfalls noch vorhandene Ausgangsprodukte in der entstehenden wäßrigen Salzsäure. Diese Verunreinigungen stören im allgemeinen bei der Weiterverwendung der Salzsäure, insbesondere dann, wenn aus der z. B. 30 gewichtsprozentig anfallenden Salzsäure durch Aufkochen wieder HCl-Gas freigesetzt und, gegebenenfalls nach Trocknung, an anderer Stelle eingesetzt werden soll. Die Verunreinigungen befinden sich dann nahezu ausschließlich im HCl-Gas. Aber auch z. B. zur Wasseraufbereitung in Kraftwerksanlagen eingesetzte, wäßrige Salzsäure darf nur einen bestimmten Anteil an Verunreinigungen aufweisen und zwar nach DIN 19 610 u. a. organische Chlorverbindungen in einer Menge von maximal 20 mg organisch gebundenem Chlor pro Liter.

Die wäßrige Salzsäure muß in solchen Fällen also von den in ihr gelösten Chlorierungsprodukten und von gegebenenfalls noch vorhandenen Einsatzstoffen befreit werden.

Das kann sowohl durch Extraktion mit einem geeigneten, d. h. in wäßriger Salzsäure nur wenig löslichen Extraktionsmittel, als auch durch « Strippen », d. h. durch Austreiben mit einem Trägergas, erfolgen. Beide Möglichkeiten sind bekannt.

Das später beschriebene erfindungsgemäße Verfahren betrifft letzteren Vorgang, d. h. die Reinigung wäßriger Salzsäuren durch Strippen mit HCl-Gas ; insbesondere bezieht es sich auf überazeotrope Salzsäuren (HCl-Gehalt also größer als etwa 20 Gewichtsprozent), aus denen ein Teil des potentiell freisetzbaren HCl-Gases durch Destillieren freigesetzt und als Strippgas benutzt werden kann. Entsprechend den bekannten Dampfdruckwerten wäßriger Salzsäuren (A. Schmidt, Chem. Ing. Tech. 25 (1953), 455 ff) enthält dieses HCl-Strippgas geringe Mengen Wasserdampf.

Im vorliegenden Fall betrifft die Reinigung von Salzsäuren konkret die Entfernung von $C_1$-Chlorkohlenwasserstoffen.

Aus dem Stand der Technik sind zwei Verfahren zum Strippen überazeotroper, wäßriger Salzsäuren mit HCl-Gas bekannt ; in beiden wird das Strippgas durch Aufkochen der wäßrigen Salzsäure als Teil der potentiell gewinnbaren HCl-Gasmenge destillativ freigesetzt ; in keinem Fall wird jedoch die Entfernung von $C_1$-Chlorkohlenwasserstoffen beschrieben. Das Ziel beider Verfahren ist die Auffindung einer vorteilhaften Behandlung (Aufarbeitung) des Stripper-über-Kopf-Austrages.

Die Firma Hoechst AG sieht diese in der Absorption des Stripper-über-Kopf-Austrages in siedendem Wasser, wobei keine HCl-Verluste eintreten und die ausgetriebenen Verunreinigungen vollständig wiedergewonnen werden sollen. Allerdings führt diese Fahrweise nach Hoechsteigenen Angaben zu derartigen — insbesondere regelungstechnischen — Komplikationen, daß die technische Realisierung unpraktikabel wird (Chem. Ing. Techn. 35 (1963), 262 ff).

Gemäß der japanischen Patentanmeldung JP-A-66/54 049 soll das Strippen hochkonzentrierter Salzsäure (zwecks Entfernung gelöster Chlorkohlenwasserstoffe) vorteilhaft dann zu betreiben sein, wenn « erfindungsgemäß eine gewöhnliche Destillationskolonne (im folgenden « erste Kolonne » genannt) oben mit einer zweiten Kolonne ausgerüstet » wird. Die zu reinigende Salzsäure wird auf den Kopf der oberen Kolonne gegeben und durchströmt diese in gleicher Richtung mit dem aus der unteren Kolonne kommenden, ebenfalls am Kopf der oberen Kolonne zugeführten Gas-Strom. Am Sumpf der oberen Kolonne wird ein HCl-Verunreinigungs-Gas-Strom abgezogen, der den Auslaß für die Verunreinigungen darstellt, über dessen Verbleib aber keine Angaben gemacht werden. Die flüssige Salzsäure fließt vom Sumpf der oberen Kolonne mit nahezu Siedetemperatur auf den Kopf der unteren Kolonne, in welcher das eigentliche Strippen durch Aufkochen des Sumpfes stattfindet. Warum diese Anordnung besonders vorteilhaft sein soll, ist indes nicht erkennbar.

Eigene Untersuchungen zum Stand der Technik haben gezeigt, daß die Entfernung von $C_1$-Chlorkohlenwasserstoffen aus wäßrigen Salzsäuren durch Strippen mit HCl-Gas erhebliche Schwierigkeiten bereitet. Kennzeichnend für den zitierten Stand der Technik ist die Tatsache, daß über die gezielte Entfernung von $C_1$-Chlorkohlenwasserstoffen nicht berichtet wird.

Die vorgenannten Schwierigkeiten treten besonders zu Tage, wenn man unter erhöhtem Druck strippen möchte, wenn hochkonzentrierte Salzsäuren zu handhaben sind und wenn die Konzentration an gelösten $C_1$-Chlorkohlenwasserstoffen hoch ist, wobei alle drei Fälle im Zusammenhang mit verfahrensökonomischen Überlegungen von Bedeutung sind.

Unter diesen Umständen wird die zur Erzielung einer gewünschten minimalen Konzentration der Verunreinigungen (von z. B. 10 Gewichts-ppm) erforderlich HCl-Strippgasmenge dann u. U. rasch so groß, daß sie wirtschaftlich nicht mehr vertretbar ist. Einen Eindruck dieses Sachverhaltes vermitteln die Ergebnisse der nachfolgend beschriebenen Versuchsreihe :

Eine mit 10 × 10 mm Berlsätteln gefüllte Destillationskolonne aus Glas von 25 mm Durchmesser und 1 600 mm Füllkörperschütthöhe wird bei einem Druck von 1 bar mit 12 kg/h einer 30 gewichtsprozentigen Salzsäure beaufschlagt. Der Zulauf erfolgt am Kopf der Kolonne. Die Zulauftemperatur beträgt 50 °C. Der Sumpf des Strippers wird über einen mit Thermostatenöl beaufschlagten Wärmetauscher auf Siedetemperatur (hier 91 bis 92 °C) gehalten. Die gestrippte Salzsäure wird aus dem Sumpf des Strippers abgezogen.

Die Konzentration der Verunreinigungen in der zufließenden Salzsäure beträgt 1 200 mg organisch gebundenes Chlor pro Liter. Die Verunreinigungen bestehen aus $CH_3Cl$, $CH_2Cl_2$, $CHCl_3$ und $CCl_4$ im Gewichtsverhältnis 1 : 3 : 1 : 0,03.

Um die Konzentration der Verunreinigungen in der abfließenden Salzsäure auf 10 mg organisch gebundenes Chlor pro Liter zu bringen, müssen 0,3 % der dem Stripper — in Form wäßriger Salzsäure — zugeführten HCl-Menge über Kopf, also als Strippgas abgezogen werden.

Alsdann wird der Druck am Kopf der Kolonne von 1 auf 4 bar (absolut) erhöht, wodurch der Siedepunkt der im Sumpf des Strippers abgezogenen, wäßrigen Salzsäure auf etwa 130 °C ansteigt. Um unter diesen Bedingungen eine Restkonzentration an Verunreinigungen in der gestrippten Salzsäure von wiederum 10 mg organisch gebundenem Chlor pro Liter einzustellen, müssen 1,6 bis 1,7 % der dem Stripper insgesamt zugeführten HCl-Menge als Strippgas über Kopf genommen werden. Das ist etwa die 5- bis 6fache Menge im Vergleich zur Normaldruckstrippung.

Wird bei 4 bar (absolut) noch die HCl-Konzentration der zufließenden Salzsäure von 30 auf 35 Gewichtsprozent angehoben, so ergibt sich folgendes Bild :

Um eine Restkonzentration an Verunreinigungen in der gestrippten Salzsäure von 10 mg organisch gebundenem Chlor pro Liter zu erhalten, müssen nunmehr 10 bis 12 % der dem Stripper insgesamt zugeführten HCl-Menge als Strippgas über Kopf abgenommen werden. Das ist im Vergleich zu der ebenfalls bei 4 bar (absolut) gestrippten, 30 gewichtsprozentigen Salzsäure die 6- bis 7fache Menge.

Schließlich ist der Einfluß der Verunreinigungskonzentration auf die erforderliche Strippgasmenge an nachfolgend beschriebenem Beispiel zum Stand der Technik erkennbar :

Eine mit 25 × 25 mm Raschigringen gefüllte Destillationskolonne aus Glas von 200 mm Durchmesser und 3 000 mm Füllkörperschütthöhe wird bei einem Druck von 1 bar (absolut) mit 425 kg/h einer 35 gewichtsprozentigen Salzsäure beaufschlagt. Der Zulauf erfolgt am Kopf der Kolonne. Die Zulauftemperatur beträgt 20 °C. Der Sumpf des Strippers wird mit Dampf auf Siedetemperatur (hier etwa 65 °C) gehalten. Die gestrippte Salzsäure wird aus dem Sumpf des Strippers abgezogen. Die Konzentration der Verunreinigungen in der zufließenden Salzsäure beträgt 1 700 mg organisch gebundenes Chlor pro Liter. Wie oben, bestehen auch hier die Verunreinigungen aus $CH_3Cl$, $CH_2Cl_2$, $CHCl_3$ und $CCl_4$ im Gewichtsverhältnis 1 : 3 : 1 : 0,03. Um die Konzentration der Verunreinigungen in der abfließenden Salzsäure auf 20 mg organisch gebundenes Chlor pro Liter zu bringen, müssen 0,3 bis 0,4 % der dem Stripper in Form wäßriger Salzsäure zugeführten HCl-Menge über Kopf, also als Strippgas, abgezogen werden.

Erhöht man die Konzentration der Verunreinigungen in der zufließenden Salzsäure auf 5 000 mg organisch gebundenes Chlor pro Liter, so werden nunmehr etwa 4,8 % der dem Stripper in Form wäßriger Salzsäure zugeführten HCl-Menge als Strippgas erforderlich, also etwa die 10- bis 15 fache Menge, um vorgenannte Restkonzentration an Verunreinigungen von 20 mg organisch gebundenem Chlor pro Liter zu erreichen.

Im Hinblick auf die mit aus dem Stand der Technik bekannten Verfahren erzielbaren Ergebnisse stellt sich nun die Aufgabe, nach einem Reinigungsverfahren zu suchen, das ein erfolgreiches Strippen auch bei Anwendung von erhöhtem Druck, bei Einsatz stark verunreinigter und hochkonzentrierter Salzsäuren erlaubt.

Um solch einen Reinigungsprozeß möglichst wirtschaftlich zu gestalten, ist ferner darauf zu achten, daß die Energieverbräuche gering sind, die aus den Salzsäuren entfernten $C_1$-Chlorkohlenwasserstoffe weitgehend zurückgewonnen und die HCl-Verluste beim Reinigen möglichst niedrig gehalten werden können. Weiterhin ist es ein Ziel, die Strippgasmenge möglichst gering zu halten.

Für die wäßrige Salzsäure als zu strippende Flüssigkeit heißt das folgendes :

Die Energieverbräuche lassen sich gering halten, wenn die zu reinigende Salzsäure möglichst hochkonzentriert gewählt wird (spezifische Wärme und Verdampfungswärme sinken mit steigender HCl-Konzentration, die pro Zeiteinheit verarbeitete und damit bereitstellbare HCl-Menge steigt mit steigender HCl-Konzentration).

Eine HCl- und hinsichtlich der $C_1$-Chlorkohlenwasserstoffe verlustfreie Fahrweise ist erreichbar, wenn der Über-Kopf-Austrag des Strippers in den HCl-Absorptionsteil des Chlorierungsprozesses zurückgeführt wird. Da der HCl-Absorptionsteil im allgemeinen unter leicht erhöhtem Druck betrieben wird, ist es vorteilhaft, das Strippen der anfallenden Salzsäure unter erhöhtem Druck zu betreiben.

Schließlich sollte die zum Reinigen der wäßrigen Salzsäure freizusetzende HCl-Strippgasmenge möglichst gering sein. Hohe HCl-Strippgasmengen erfordern zum einen viel Verdampfungsenergie, zum anderen führen sie zu einem deutlichen Konzentrationsabfall der wäßrigen Salzsäure, wodurch die gewinnbare HCl-Gasmenge pro Masseneinheit Salzsäure sinkt, was energetisch ungünstig für die nach der Strippung im allgemeinen stattfindende HCl-Gasgewinnung ist. Außerdem wird bei Rückführung eines hohen HCl-Strippgasstromes in den HCl-Absorptionsteil des Chlorierungsprozesses die Kapazität dieses Absorptionsteiles eingeschränkt. Verzichtet man auf eine HCl-Strippgasrückführung, resultieren bei großen Mengen im allgemeinen auch hohe Verluste.

Es wurde nun überraschend gefunden, daß die Mängel bei Anwendung der bekannten Verfahren zur Entfernung von $C_1$-Chlorkohlenwasserstoffen aus wäßrigen Salzsäuren durch Strippen mit HCl-Gas, welches zweckmäßigerweise durch Aufkochen der Salzsäure freigesetzt wird, durch Anwendung des erfindungsgemäßen Verfahrens überwunden werden, bei dem diese Entfernung von Verunreinigungen in einer Blasensäule statt in der bisher üblichen Destillationskolonne durchgeführt wird.

Es sind Kolonnen normaler Bauart für das erfindungsgemäße Verfahren geeignet, wenn sie nicht — wie bisher üblich — berieselt, sondern — wie ganz unüblich — geflutet, also als Blasensäule, betrieben werden.

Die Blasensäulen können leer betrieben werden ; vorzugsweise werden aber gefüllte Blasensäulen, d. h. Blasensäulen mit Füllkörperschüttungen, eingesetzt.

Besondere Anforderungen an die Bauart der eingesetzten Füllkörper sind im allgemeinen nicht zu stellen. Es können also z. B. Raschigringe, Berlsättel oder Pallringe aus jeweils für den Prozeß geeignetem Material benutzt werden.

Besonders günstige Fahrweisen werden im allgemeinen erzielt, wenn der Füllkörperdurchmesser 1/10 bis 1/20 der Blasensäulendurchmesser beträgt, oder noch kleiner ist. Die untere Grenze des Füllkörperdurchmessers wird gegeben durch den sich aufbauenden Strömungswiderstand. Blasensäulen mit größeren Füllkörpern erfordern im allgemeinen einen größeren HCl-über-Kopf-Austrag zur Erzielung einer vorgegebenen Verunreinigungsrestkonzentration in der zu reinigenden Salzsäure.

In einigen Fällen, insbesondere bei Einsatz hochkonzentrierter, stark verunreinigter Salzsäuren, arbeiten leere Blasensäulen im Druckbereich von 4 bar (absolut) wesentlich günstiger als die bisher üblichen Destillationskolonnen.

Es wurde überraschenderweise gefunden, daß das Strippen der mit $C_1$-Chlorkohlenwasserstoffen verunreinigten wäßrigen Salzsäure in Blasensäulen vergleichsweise druckunempfindlich ist, wohingegen bei Verwendung von Destillationskolonnen schon geringe Druckerhöhungen sehr starke Anstiege der erforderlichen HCl-Strippgasmenge zur Folge haben, um ein vorgegebenes Reinigungsziel zu erreichen ; dies geht unmittelbar aus den vorbeschriebenen Versuchen zum Stand der Technik hervor.

Das erfindungsgemäße Verfahren gestattet das Strippen sowohl bei Normaldruck als auch bei erhöhtem Druck, praktisch ohne eine Verschlechterung des Strippergebnisses. Die Wahl des Druckes hängt von der jeweils beabsichtigten Weiterverarbeitung des Stripper-über-Kopf-Austrages ab. Im allgemeinen wird man bestrebt sein, diesen Strom einem bereits vorhandenen Aufarbeitungsteil des betreffenden Verfahrens zuzuführen, wozu Drücke bis etwa 4 bar (absolut) notwendig sind. Nach den vorliegenden Ergebnissen ist mit gravierenden Verschlechterungen des Strippvorganges bei höheren Arbeitsdrücken nicht zu rechnen.

Das nunmehr bei Anwendung des erfindungsgemäßen Verfahrens durchführbare Strippen auch unter erhöhtem Druck ermöglicht die vorteilhafte direkte Rückführung des mit den Verunreinigungen beladenen HCl-über-Kopf-Austrages in den HCl-Absorptionsteil des Chlorierungsprozesses auf einfache Weise. HCl-Absorptionsanlagen werden im allgemeinen bei leicht erhöhtem Druck (z. B. 3 bar (absolut)) betrieben. Für die genannte Rückführung reicht damit ein Druck am Kopf des Strippers aus, der geringfügig höher ist, also z. B. bei 4 bar (absolut) liegt. Die Untersuchungen zum erfindungsgemäßen Verfahren haben ein vorteilhaftes Arbeiten in diesem Bereich ergeben, wie die Beispiele ausweisen.

Besonders deutlich wird der Vorteil des erfindungsgemäßen Verfahrens in Bereichen, in denen das Strippen bisher entweder nur mit großen HCl-Gasmengen gelang oder aber gar nicht mehr praktikabel war. Das sind insbesondere Strippungen hochkonzentrierter, stark verunreinigter Salzsäuren bei erhöhtem Druck.

Sehr vorteilhaft arbeitet das erfindungsgemäße Verfahren selbst bei der Normaldruckstrippung stark verunreinigter, hochkonzentrierter Salzsäuren, wie aus dem unten angeführten Beispiel 1 unmittelbar hervorgeht.

Das erfindungsgemäße Verfahren erleichtert ferner die Handhabung hochkonzentrierter Salzsäuren. So ist z. B. der Siedepunkt einer 40 gewichtsprozentigen Salzsäure bei Normaldruck mit etwa 33 °C schon unpraktikabel niedrig, bei 4 bar (absolut) mit etwa 67 °C dagegen durchaus im Bereich einer praktikablen Arbeitsweise. 40 gewichtsprozentige Salzsäure tritt im Stripper bereits auf, wenn dieser mit 35 gewichtsprozentiger Salzsäure beaufschlagt wird.

Die nachfolgenden Beispiele erläutern das erfindungsgemäße Verfahren.

Beispiel 1

Eine mit 25 × 25 mm Raschigringen gefüllte Glaskolonne von 200 mm Durchmesser und 3 000 mm Füllkörperschütthöhe wird bei einem Druck von 1 bar (absolut) mit 425 kg/h einer 35 gewichtsprozentigen Salzsäure beaufschlagt. Der Zulauf erfolgt am Kopf der Kolonne. Die Zulauftemperatur beträgt 20 °C. Die Kolonne wird berieselt betrieben, wie bisher üblich.

Der Sumpf des Strippers wird über einen mit ND-Dampf beaufschlagten Wärmetauscher auf Siedetemperatur, also etwa 65 °C, gehalten. Die gestrippte Salzsäure wird aus dem Sumpf des Strippers abgezogen. Die Verunreinigungskonzentration der zu strippenden Salzsäure liegt bei 5 000 mg organisch gebundenem Chlor pro Liter. Es handelt sich bei den Verunreinigungen ausschließlich um $C_1$-CKW folgender Zusammensetzung : $CH_3Cl : CH_2Cl_2 : CHCl_3 : CCl_4 = 1 : 3 : 1 : 0,03$ Gewichtsteile.

Um die Restkonzentration der Verunreinigungen in der abfließenden Salzsäure auf 20 mg organisch gebundenes Chlor pro Liter zu bringen, müssen etwa 4,8 % der dem Stripper in Form von wäßriger Salzsäure zugeführten HCl-Menge über Kopf, also als Strippgas, abgezogen werden.

Alsdann wird die Kolonne unter sonst gleichen Bedingungen in geflutetem Zustand, also als gefüllte Blasensäule, betrieben. Um auf den gleichen Restgehalt an Verunreinigungen von 20 mg organisch gebundenem Chlor pro Liter zu kommen, müssen nur 1,5 % der dem Stripper zugeführten HCl-Menge als Strippgas über Kopf gezogen werden.

Beispiel 2

Eine mit 4 × 4 mm Raschigringen gefüllte Glaskolonne von 100 mm Durchmesser und 3 000 mm Füllkörperschütthöhe wird bei einem Druck von 1 bar (absolut) mit 45 kg/h einer 35 gewichtsprozentigen Salzsäure beaufschlagt. Der Zulauf erfolgt am Kopf der Kolonne. Die Zulauftemperatur beträgt 20 °C. Die Kolonne wird berieselt betrieben, wie bisher üblich.

Der Sumpf des Strippers wird über einen mit Thermostatöl beaufschlagten Wärmetauscher auf Siedetemperatur, also etwa 65 °C, gehalten.

Die gestrippte Säure wird aus dem Sumpf des Strippers abgezogen. Die Konzentration der Verunreinigungen in der zu strippenden Salzsäure liegt bei 1 200 mg organisch gebundenem Chlor pro Liter. Es handelt sich wie im Beispiel 1 um $C_1$-CKW.

Um unter diesen Bedingungen eine Restkonzentration an Verunreinigungen in der gestrippten Säure von 10 mg organisch gebundenem Chlor pro Liter zu erzielen, müssen etwa 2 bis 3 % der dem Stripper insgesamt zugeführten HCl-Menge als Strippgas über Kopf gezogen werden.

Alsdann wird die Kolonne unter sonst gleichen Bedingungen in geflutetem Zustand, also als gefüllte Blasensäule, betrieben. Um auf den gleichen Verunreinigungsrestanteil von 10 mg organisch gebundenem Chlor pro Liter zu kommen, brauchen jetzt nurmehr etwa 1 % der dem Stripper zugeführten HCl-Menge als Strippgas über Kopf genommen werden.

Beispiel 3

Die Anordnung nach Beispiel 2 wird statt bei 1 bar (absolut) bei 4 bar (absolut) betrieben. Die Sumpftemperatur des Strippers steigt somit auf etwa 100 °C an.

Im berieselten Kolonnenzustand müssen zur Erzielung einer Verunreinigungsrestkonzentration von 10 mg organisch gebundenem Chlor pro Liter etwa 10 % der dem Stripper zugeführten HCl-Menge als Strippgas abgezogen werden, im gefluteten Kolonnenzustand sind es wie bei Normaldruck nur etwa 1 %.

Der unter o. g. Druck von 4 bar (absolut) den Stripper über Kopf verlassende, mit $C_1$-Chlorkohlenwasserstoffen beladene HCl-Strippgasstrom wird in vorteilhafter Weise direkt in den unter 3 bar (absolut) betriebenen HCl-Absorber einer Methanchlorierung zurückgeführt.

Beispiel 4

Eine mit 4 × 4 mm Raschigringen gefüllte Glaskolonne von 50 mm Durchmesser und 2 000 mm Füllkörperschütthöhe wird bei einem Druck von 4 bar (absolut) mit 13 kg/h einer 35 gewichtsprozentigen Salzsäure beaufschlagt. Der Zulauf erfolgt am Kopf der Kolonne. Die Zulauftemperatur beträgt 50 °C.

Der Sumpf des Strippers wird über einen mit Thermostatöl beaufschlagten Wärmetauscher auf Siedetemperatur gehalten, etwa 100 °C. Die gestrippte Säure wird aus dem Sumpf des Strippers abgezogen. Die Beheizung wird so eingestellt, daß 2,8 bis 3,0 % der dem Stripper zugeführten HCl-Menge als Strippgas über Kopf gehen.

In der zu strippenden Säure sind $C_1$-CKW der bereits genannten Zusammensetzung in einer Konzentration von 3 000 mg organisch gebundenem Chlor pro Liter gelöst.

Beim Betrieb des Strippers in berieseltem Zustand kann eine Verunreinigungskonzentration in der gestrippten Säure von 110 mg organisch gebundenem Chlor pro Liter erzielt werden, im gefluteten Zustand, entsprechend einer gefüllten Blasensäule, sind dies 25 mg organisch gebundenes Chlor pro Liter.

Beispiel 5

Eine mit 25 × 25 mm Raschigringen gefüllte Glaskolonne von 200 mm Durchmesser und 3 000 mm Füllkörperschütthöhe wird bei einem Druck von 1 bar (absolut) mit 180 kg/h einer 35 gewichtsprozentigen Salzsäure beaufschlagt. Der Zulauf erfolgt am Kopf der Kolonne. Die Zulauftemperatur beträgt 20 °C. Die Kolonne wird geflutet, also als gefüllte Blasensäule, betrieben.

Der Sumpf des Strippers wird mit ND-Dampf auf Siedetemperatur gehalten, etwa 65 °C. Die gestrippte Säure wird aus dem Sumpf des Strippers abgezogen. Die Beheizung wird so eingestellt, daß 0,6 % der dem Stripper zugeführten HCl-Menge als Strippgas über Kopf gehen.

In der zu strippenden Säure sind 1 200 mg organisch gebundenes Chlor pro Liter gelöst. Es handelt sich um vorgenannte $C_1$-CKW.

Unter den geschilderten Fahrbedingungen wird eine Verunreinigungsrestkonzentration von 70 mg organisch gebundenem Chlor pro Liter in der gestrippten Salzsäure erzielt.

Benutzt man kleinere Raschigringe als Füllkörper, nämlich solche mit den Abmessungen $15 \times 15$ mm, kommt man unter sonst gleichen Bedingungen auf eine Verunreinigungsrestkonzentration von 30 mg organisch gebundenem Chlor pro Liter.

Beispiel 6

Eine Glaskolonne von 50 mm Durchmesser wird mit einer 1 000 mm Schüttung Glaswendeln ($12 \times 12$ mm) versehen und mit 13 kg/h einer 35 gewichtsprozentigen Salzsäure bei einem Druck von 4 bar (absolut) beaufschlagt. Der Zulauf erfolgt am Kolonnenkopf, die Zulauftemperatur beträgt 50 °C. Die Salzsäure enthält vorerwähnte Verunreinigungen in einer Konzentration von 1 500 mg organisch gebundenem Chlor pro Liter gelöst.

Der Sumpf der Anordnung wird über einen mit Thermostatöl beaufschlagten Wärmetauscher auf Siedetemperatur gehalten, etwa 100 °C. Die Beheizung wird so eingestellt, daß außerdem 3 % der zugeführten HCl-Menge über Kopf abgezogen werden können.

Wird ein solcher Stripper — wie bisher üblich — berieselt betrieben, erzielt man eine Verunreinigungsrestkonzentration in der aus dem Sumpf abfließenden Salzsäure von etwa 120 mg organisch gebundenem Chlor pro Liter. Entfernt man die Füllkörperschüttung und betreibt statt dessen die Kolonne als leere Blasensäule, kommt man unter sonst gleichen Bedingungen auf etwa 80 mg organisch gebundenes Chlor pro Liter.

**Patentansprüche**

1. Verfahren zur Reinigung von mit $C_1$-Chlorkohlenwasserstoffen verunreinigten Salzsäuren durch Strippen mit HCl-Gas, dadurch gekennzeichnet, daß das Strippen in einer Blasensäule durchgeführt wird.

2. Verfahren nach Anspruch 1, dadurch gekennzeichnet, daß die Blasensäule mit Füllkörpern gefüllt ist.

3. Verfahren nach Anspruch 2, dadurch gekennzeichnet, daß der Durchmesser der Füllkörper 1/10 bis 1/20 des Blasensäulendurchmessers beträgt.

4. Verfahren nach Anspruch 1 bis 3, dadurch gekennzeichnet, daß der Stripper bei einem Druck von 1 bis 4 bar (absolut) betrieben wird.

5. Verfahren nach Anspruch 1 bis 4, dadurch gekennzeichnet, daß der den Stripper über Kopf verlassende, mit den $C_1$-Chlorkohlenwasserstoffen beladene HCl-Strippgasstrom direkt in eine geeignete Aufarbeitungsstufe des Prozesses zurückgeführt wird.

**Claims**

1. A process for the purification of hydrochloric acid containing chloromethane impurities by stripping with HCl gas, characterised in that the stripping is carried out in a bubble column.

2. A process according to claim 1, characterised in that the bubble column is filled with particles of packing material.

3. A process according to claim 2, characterised in that the diameter of the packing material particles is from 1/10th to 1/20th of the diameter of the bubble column.

4. A process according to any of claims 1 to 3, characterised in that the stripper is operated at a pressure of from 1 to 4 bar (absolute).

5. A process according to any of claims 1 to 4, characterised in that the HCl stripping gas stream laden with chloromethanes leaving the head of the column is recycled directly into an appropriate working-up stage of the process.

**Revendications**

1. Procédé de purification d'acides chlorhydriques souillés par des chloro-hydrocarbures en $C_1$, par stripping avec du gaz chlorhydrique, caractérisé par le fait que le stripping est effectué dans une colonne à bulles.

2. Procédé selon la revendication 1, caractérisé par le fait que la colonne à bulles est garnie de corps de remplissage.

3. Procédé selon la revendication 2, caractérisé par le fait que le diamètre des corps de remplissage atteint du dixième au vingtième du diamètre de la colonne à bulles.

4. Procédé selon les revendications 1 à 3, caractérisé par le fait que la colonne à bulles fonctionne à une pression de 1 à 4 bars (absolus).

5. Procédé selon les revendications 1 à 4, caractérisé par le fait que le débit de gaz chlorhydrique quittant la tête de la colonne à bulles et est chargé des chlorohydrocarbures en $C_1$ est directement recyclé dans un étage de traitement approprié du procédé.